# EUROPÄISCHE PATENTSCHRIFT

(11) **EP 2 148 792 B1**
(45) Veröffentlichungstag und Bekanntmachung des Hinweises auf die Patenterteilung: **24.10.2012**
(21) Anmeldenummer: 08748987.8
(22) Anmeldetag: 18.04.2008
(51) Int. Cl.: B60K 37/06, H01H 9/18, G02F 1/13357

(54) **ANZEIGEEINRICHTUNG IN EINEM KRAFTFAHRZEUG**
INDICATOR DEVICE IN A MOTOR VEHICLE
DISPOSITIF D'INDICATEUR DANS UN VÉHICULE À MOTEUR

(30) Priorität: 20.04.2007 DE 102007018719
(43) Veröffentlichungstag der Anmeldung: 03.02.2010
(73) Patentinhaber: PREH GmbH, 97616 Bad Neustadt (DE)
(72) Erfinder: JEITNER, Martin, 97645 Ostheim (DE)
(74) Vertreter: Bauer Vorberg Kayser Patentanwälte
(86) Internationale Anmeldenummer: PCT/EP2008/003132
(87) Internationale Veröffentlichungsnummer: WO 2008/128718

(56) Entgegenhaltungen:
- EP-A- 0 577 331
- DE-A1- 10 342 142
- DE-A1-102005 043 588

## Beschreibung

Die Erfindung betrifft eine Anzeigeeinrichtung in einem Kraftfahrzeug, bestehend aus einer Anzeige, einem hinter der Anzeige angeordneten, durchleuchtbaren Display, einem Leuchtmittel und einem Reflektor, wobei das Leuchtmittel zwischen dem Display und dem Reflektor in der Anzeigeeinrichtung befestigt ist und das Licht des Leuchtmittels mittels des Reflektors parallelisierbar und in Richtung und durch das Display auf die Anzeige leitbar ist, so dass eine mittels des Displays veränderbare Symbolik auf der Anzeige darstellbar ist.

In modernen Kraftfahrzeugen ist es für den Bediener möglich aus einer Vielzahl von Funktionen, die das Kraftfahrzeug bereitstellt, auszuwählen. Um die Bedienung zu erleichtern, aus ergonomischen Gründen und um dem Bediener eine menübezogene Funktionsauswahl bereitzustellen, ist es bekannt, unterschiedliche Symboliken, Schriften oder Piktogramme in Anzeigen, Displays und Bedienelementen anzuzeigen. Hierbei ist es zum Beispiel möglich, einer Bedientaste elektronisch unterschiedliche Funktionen zuzuweisen und diese auf der Tastenoberfläche, die hier als Anzeige bezeichnet ist, darzustellen. Wird beispielsweise der Taste im Menü Gebläsesteuerung die Funktion zugewiesen, das Gebläse einzustellen, so erscheint auf der Oberfläche der Taste die Anzeige, die ein Gebläse darstellt. Wird in einem weiteren Menüpunkt der Taste die Funktion Lautstärke zugewiesen, so erscheint auf der Oberfläche die Anzeige in Form eines, zum Beispiel Lautsprechers. So wird für den Bediener eine überschaubare Anzahl von Bedientasten zur Verfügung gestellt, was die Bedienbarkeit des Kraftfahrzeuges wesentlich erleichtert. Hierbei wird an dieser Stelle bereits darauf hingewiesen, dass die erfindungsgemäße Anzeigeeinrichtung nicht auf Tasten, Bedienelemente oder Anzeigen, wie Bildschirmen, beschränkt ist, sondern sich auf alle Bedienelemente bezieht, in denen veränderbare Symboliken darzustellen sind.

Ein aus dem Stand der Technik bekanntes Bedienelement mit einer frei programmierbaren Symbolik ist aus der Offenlegungsschrift DE 103 42 142 A1 bekannt. Beschrieben ist hierbei das Erzeugen einer frei programmierbaren Symbolik auf einer Tastenkappe eines Bedienknopfes eines Kraftfahrzeuges. Die von der Bewegung der Taste unabhängige Anzeige einer Symbolik in der Tastenkappe wird hierbei dadurch erzielt, dass das von einem Leuchtmittel imitierte Licht mittels einer Linse parallelisiert wird und durch ein programmierbares Display auf die Innenseite der Tastenkappe fällt. Durch die Parallelisierung des Lichtes wird die Divergenz des Leuchtmittels aufgehoben, und ein von der Stellung der Tastenkappe oberhalb des Displays unabhängiges Symbol auf der Tastenkappe angezeigt.

In der DE 10 2005 043 588 A1 ist ein weiteres Bedienelement mit einer frei programmierbaren Symbolik für ein Kraftfahrzeug offenbart. Dieser gattungsbildende Stand der Technik beschreibt ein Bedienelement, in dem das zur positionsunabhängigen Anzeige von Symboliken notwendige parallelisierte Licht mittels eines Hohlspiegels erzeugt wird. Zur Reduzierung der Bauhöhe ist hierbei das Leuchtmittel zwischen dem Display und dem Hohlspiegel in dem Bedienelement befestigt. Das Licht wird ausgehend von einem Leuchtmittel auf einen Hohlspiegel emittiert und von dort aus parallelisiert durch ein Display geleitet, wodurch wiederum eine frei programmierbare Symbolik auf der Tastenkappe anzeigbar ist.

Die EP 0 577 331 A beschreibt die Optimierung eines Kontrastes einer LCD-Zelle indem hinter die LCD-Zelle ein Spiegel positioniert wird, der einen gerichteten Strahl zurückwirft. Eine Lichtquelle wird zwischen dem LCD-Display und dem Spiegel positioniert.

Die Aufgabe der Erfindung ist es, eine Hinterleuchtung zur Erzeugung von annähernd parallelem Licht zur Ausleuchtung von Anzeigen bereitzustellen, die einen besonders hohen Wirkungsgrad aufweisen. Darüber hinaus soll die Parallelisierung des Lichtes kostengünstig und konstruktiv einfach realisierbar sein.

Die gestellte Aufgabe wird erfindungsgemäß dadurch gelöst, dass der Reflektor zur Erzielung des parallelen Lichtes ein Facettenreflektor ist. Durch eine Ausrichtung der Facetten des Facettenreflektors auf die Lage des Leuchtmittels im Bedienelement ist es erfindungsgemäß möglich, eine Ausleuchtung von Anzeigen mit besonders hohem Wirkungsgrad bereitzustellen.

Vorteilhafte Ausgestaltungen der Erfindung sind in den Unteransprüchen wiedergegeben. Insbesondere die Anordnung eines Leuchtmittels, wie beispielsweise einer Lichtemittierenden Diode (LED) auf einer Leiterplatte, ermöglicht es, einen hohen Grad an Parallelität im Licht zu erzielen. Hierbei ist es besonders vorteilhaft, wenn die Lichtquelle annähernd mittig zum Facettenreflektor im Bedienelement befestigt ist. In diesem Fall besitzt die Leiterplatte Öffnungen, die auch als Ausnehmungen in der Leiterplatte oder Durchbrüche bezeichenbar sind und durch die das von dem Leuchtmittel emittierte und vom Facettenreflektor reflektierte Licht hindurch auf das Display führbar ist. Dies bietet weiterhin den Vorteil, dass die Ausnehmung in der Leiterplatte derart ausbildbar ist, dass in Randbereichen divergierendes Licht eliminierbar ist, so dass dem Anzeigebereich entsprechendes paralleles Licht zur Erzeugung von Symbolen, Schrift oder Piktogrammen zur Verfügung steht.

Das Licht gelangt ausgehend von dem Leuchtmittel auf den Facettenreflektor. Der Reflektor wird wie er auch in den Figuren beispielhaft dargestellt ist, als Facettenreflektor bezeichnet, weil er aus einer Vielzahl von Reflektorelementen besteht. Die Reflektorelemente sind in der Weise ausgerichtet, dass sie im Wesentlichen annähernd paralleles Licht erzeugen. Außerdem wird Licht in der Weise reflektiert, dass kein Schattenwurf entsteht und die LCD homogen ausgeleuchtet ist. Um eine höhere Leuchtdichte zu erhalten, kann der zur Beleuchtung verwendete Bereich des Reflektors größer sein als die vorhandene LCD-Fläche. Anders als bei einem planen Spiegel wird Licht nicht direkt in die Lichtquelle zurück reflektiert, sondern seitlich vorbei. Der Facettenreflektor definiert sich hierbei durch eine Vielzahl von Reflektorelementen, die je nach Abstand zum Leuchtmittel, der Position des Leuchtmittels zum Facettenreflektor und der Position des Facettenreflektors zum Display eine unterschiedliche Ausrichtung aufweisen. Die Ausrichtung, das heißt die Winkel der Reflektorelemente, ist hierbei derart ausgerichtet, dass das Licht kommend von dem Leuchtmittel auf jedem Reflektorelement oder Facettenelement derart reflektiert wird, dass annähernd paralleles Licht auf das Display geleitet wird. Parallel bedeutet, dass die Lichtstrahlen ausgehend von dem Facettenreflektor parallel in Richtung des Displays geleitet werden, dabei treffen sie nahezu oder genau rechtwinklig auf das Display. Durch die sehr homogene Parallelisierung des Lichtes kann ein Abbild des auf dem Display erzeugten Symbols sehr deutlich als Anzeige auf dem Bedienelement abgebildet werden.

Nachfolgend wird die Erfindung anhand zweier Ausführungsbeispiele näher erläutert. Es zeigt
- Figur 1: einen Querschnitt durch eine Anzeigeeinrichtung in einem Kraftfahrzeug und
- Figur 2: eine weitere Ausführungsform einer Anzeigeeinrichtung in einem Kraftfahrzeug, die ebenfalls prinzipiell und im Schnitt mit ihren wesentlichsten Elementen wiedergegeben ist.

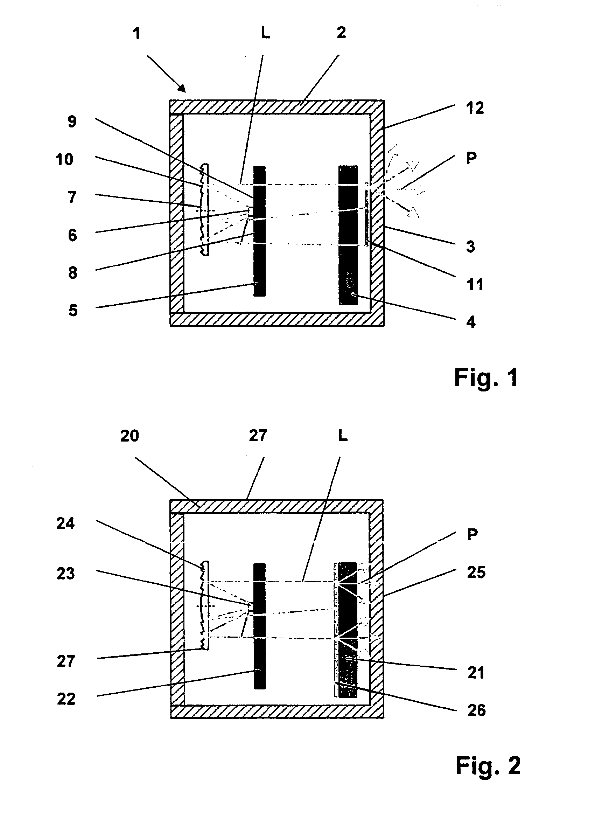

Die Figur 1 zeigt eine Anzeigeeinrichtung 1, die prinzipiell und im Schnitt dargestellt ist. In einem Gehäuse 2 befindet sich unmittelbar hinter einer Anzeige 3 ein durchleuchtbares Display 4 hinter dem wiederum eine Leiterplatte 5 im Gehäuse 2 befestigt ist. Auf der Leiterplatte 5 ist ein Leuchtmittel 6 gehalten und elektrisch angeschlossen. Wiederum, von der Anzeige 3 ausgesehen hinter der Leiterplatte ist ein Facettenreflektor 7 im Gehäuse 2 befestigt. In der Leiterplatte 5 sind Öffnungen 8,9 enthalten, so dass die Lichtstrahlen L ausgehend vom Leuchtmittel 6 auf den Facettenelementen 10 reflektiert durch die Öffnung 9 auf das Display 4 und durch das Display hindurch auf die Anzeige 3 gelangen können.

Der Facettenreflektor 7 besitzt Reflektoreiemente 10, die wie in der Figur 1 deutlich zu erkennen ist, unterschiedliche Neigungswinkel besitzen, so dass je nach Position des Leuchtmittels 6 zum Facettenreflektor 7 beziehungsweise jedem einzelnen Bereich oder Facettenelement oder Reflektorelement 10 das Licht unterschiedlich reflektiert wird. Dieser unterschiedliche Reflektionswinkel ermöglicht es einerseits homogenes, parallelisiertes Licht L zu erzeugen und andererseits ist durch die Ausrichtung der Reflektorelemente 10 es möglich durch lediglich annähernd parallelisiertes Licht auch die Bereiche der Leiterplatte 5 hinter dem Leuchtmittel 6 homogen und ohne Schattenbildung auszuleuchten.

In dem in der Figur 1 dargestellten Ausführungsbeispiel einer Anzeigeeinrichtung 1 sitzt das Leuchtmittel 6 in etwa mittig über dem Facettenreflektor 7. Hierdurch ist es möglich, den Facettenreflektor symmetrisch auszubilden, so dass die Anzeigeeinrichtung kostengünstig fertigbar ist. Ein weiterer Vorteil der erfindungsgemäßen Anzeigeeinrichtung ist der, dass eine sehr kompakte Bauweise der Anzeigeeinrichtung 1 ermöglicht wird, da die Leiterplatte zwischen dem Reflektor und dem Display anordbar ist. Hierdurch ist eine äußerst kompakte Anzeigeeinrichtung 1 realisierbar, da auch weitere elektronische Bauteile, die für die Anzeige oder Funktion der Symboliken im Display oder zur Steuerung notwendig sind, auf der Leiterplatte 5 montierbar sind.

Das Licht L wird durch den Facettenreflektor 7 nahezu parallel auf das durchleuchtbare Display geleitet. In diesem Ausführungsbeispiel ist das Display als Liquidkristalldisplay (LCD) ausgestaltet. LCDs sind günstige Standardbauteile, die bei geringen Kosten eine gute Abbildungsqualität gewährleisten. Das LCD 4 wird von einer hier nicht dargestellten Kontrolleinrichtung angesteuert, so dass eine gewünschte Symbolik, Schrift oder ein Piktogramm erzeugbar ist. Bei dem LCD 4 handelt es sich somit um ein frei programmierbares Display, so dass auch animierte Symbole in der Anzeige 3 anzeigbar sind.

In der in Figur 1 dargestellten Ausführungsform besitzt die Anzeigeeinrichtung 1 eine Streufolie 11, die auf die Rückseite der Anzeige 3 aufgebracht ist. Die Streufolie 11 wirkt divergierend, wie mit den Pfeilen P angedeutet. Hierdurch ist es möglich, zwar eine sehr konturenschafe Anzeige 3 mittels des Lichtes L und des Displays 4 zu erzielten, wobei mittels der Streufolie 11, die auch ais Streuschicht 11, wie beispielsweise eine aufgeraute Oberfläche, ausbildbar ist, ein divergierendes Licht P in der Anzeige 3 erzeugbar ist, so dass die Anzeige 3 von allen Seiten her gut sichtbar ist. Die Streufolie 11 ist alternativ auch auf dem Display 4 in Richtung der Anzeige 3 befestigbar.

Die Anzeigeeinrichtung besteht im Wesentlichen aus einem Leuchtmittel 6, einem Facettenreflektor 7 und einem durchleuchtbaren Display 4. Mittels dieser Elemente 4, 6, 7 sind äußerst präzise Symbole in der Anzeige 3 abbildbar. Die Anzeige 3 besteht in diesem Ausführungsbeispiel aus einem transluzenten Kunststoff, wie beispielsweise Polycarbonat (PC oder Polymethylmethacrylat (PMMA)) und besitzt eine bevorzugt eine Dicke von ungefähr 6 mm. Das hier lediglich beispielhaft dargestellte Gehäuse 2 kann ein Taster, ein Drehknopf, ein Drehdruckknopf oder eine direkte Anzeige als Display oder Bildschirm in einem Kraftfahrzeug sein. Das wesentliche der Erfindung ist hierbei die Erzielung eines parallelen Lichtes zur Durchleuchtung eines Displays 4, so dass sehr genaue Symboliken an einer Oberfläche 12 abbildbar sind.

Die Figur 2 zeigt einen alternativen Aufbau einer Anzeigeeinrichtung 20, die im Wesentlichen dem Aufbau des Ausführungsbeispieles gemäß der Figur 1 entspricht. Enthalten sind wiederum ein Display 21, eine auf einer Leiterplatte 22 befestigte Lichtquelle 23 sowie ein Facettenreflektor 24. Das mittels der Lichtquelle 23 emittierte Licht wird auf eine Anzeige 25 geworfen. Die Funktion und der Aufbau entsprechen dem Ausführungsbeispiel gemäß der Figur 1.

Ein wesentlicher Unterschied besteht darin, dass eine Streufolie 26 auf der von der Anzeige 25 ausgesehen hinteren Seite des Displays 21 eine Streufolie 26 angeordnet ist. Hierdurch wird erreicht, dass das Licht bereits unmittelbar vor dem Display divergiert. Die Streufolie 26 wirkt hierbei somit wie eine Vielzahl von Leuchtmitteln, die unmittelbar hinter dem Display 21 angeordnet sind.

Es sei darauf hingewiesen, dass ein derartiger Aufbau einer Anzeigeeinrichtung 1, 20 sich auch besonders dazu eignet, dort eingesetzt zu werden, wo die Anzeige 3, 25 bewegbar in einem Gehäuse 2, 27 aufgenommen ist, wie dies beispielsweise bei Drucktastern der Fall ist. Das parallele Licht L ist unabhängig von der Position der Anzeige 3, 25 von der Lichtquelle 6, 23, da paralleles Licht L auf das Display 4, 21 fällt. Vorteilhaft ist es dabei, wenn das Display 4, 21 ebenfalls bewegbar mit der Anzeige 3, 25 im Gehäuse 2, 27 aufgenommen ist.

Der Facettenreflektor 7, 24 ist derart ausgebildet, dass je nach Lage zum Leuchtmittel 6, 23 das emittierte Licht L parallel auf die Anzeige 3, 25 geleitet wird. Die einzelnen Facettenelemente 10 des Facettenreflektors 7, 24 sind dabei unterschiedlich zum Leuchtmittel 6, 24 ausgerichtet. Wie auch den Figuren 1 und 2 beispielhaft zu entnehmen weisen die einzelnen Facettenelemente 10 unterschiedliche Winkel, in Bezug auf eine Mittellinie durch den Facettenreflektor 7, 24, in dem die Mittellinie als gestrichelte Linie eingezeichnet ist und das Leuchtmittel 6, 23, auf. In der Mitte des Facettenreflektors 7, 24 ist eine nahezu ebene Fläche vorhanden, da hier die Lichtstrahlen L zur parallelen Reflexion nahezu nur reflektier und nur minimal umgelenkt werden müssen, um parallel auf die Anzeige zu treffen. Das Reflektorelement 10 weist einen kleinen Winkel, in Bezug auf die Mittellinie auf, da hier die Lichtstrahlen L um kleine Winkel abgelenkt werden müssen. Am äußeren Rand 27 sind hingegen große Winkel, in Bezug auf die Mittellinie, notwendig um die Lichtstrahlen L parallel auf das Display 4, 21 und anschließend auf die Anzeige 3, 25 zu leiten. Der Facettenreflektor 7, 24 besitzt folglich unterschiedliche Winkelbereiche in denen die Facettenelemente 10 in unterschiedlichen Winkeln angeordnet sind, die Bereiche unterteilen sich dabei in parallel oder nahezu parallel, kleinen Winkeln bis hin zu großen Winkel. In den Ausführungsbeispielen ist ein kontinuierlicher Verlauf von parallel, zu kleinen hin zu großen Winkeln dargestellt.

Die Ausbildung der Winkel und/oder Winkelbereiche und/oder parallelen Flächen der Facettenelemente 10 ist abhängig von der Lage des Leuchtmittels 6, 23 zum Facettenreflektor 7, 24 und variiert je nach Anwendung und Anordnung der Leuchtmittel 6, 23 zum Facettenreflektor 7, 24, zur Öffnung 8, 9, zum Display 4, 21 und zur Anzeige 3, 25. Als kleine Winkel werden hierbei Winkel zwischen 0° und 30° und als große Winkel werden Winkel über 30° bezeichnet.

## Patentansprüche

1. Anzeigeeinrichtung für ein Kraftfahrzeug, bestehend aus einer Anzeige (3, 25), einem hinter der Anzeige (3, 26) angeordneten, durchleuchtbaren Display (4, 21), einem Leuchtmittel (6, 23) und einem Reflektor (7, 24), wobei das Leuchtmittel (6, 23) zwischen dem Display (4, 21) und dem Reflektor (7, 24) in der Anzeigeeinrichtung (1, 20) befestigt ist und das Licht (L) des Leuchtmittels (6, 23) mittels des Reflektors (7, 24) parallelisierbar und in Richtung durch das Display (4, 21) auf die Anzeige (3, 25) leitbar ist, so dass eine mittels des Displays (4, 21) veränderbare Symbolik auf der Anzeige (3, 25) darstellbar ist, wobei die Anzeigeeinrichtung (1, 20) ein Teil eines Bedienelementes, insbesondere eines Druckknopfes ist und **dadurch gekennzeichnet, dass** der Reflektor (7, 24) ein Facettenreflektor (7, 24) ist und dass zwischen dem Display (4, 21) und dem Reflektor (7, 24) eine Leiterplatte (5, 22) in der Anzeigeeinrichtung (1, 20) befestigt ist, und dass das Leuchtmittel (6, 23) auf der dem Display (4, 21) entgegengesetzt angeordneten Seite der Leiterplatte (5, 22) befestigt ist und die Leiterplatte (5, 22) Öffnungen (8, 9) aufweist, so dass das Licht (L) des Leuchtmittels (6, 23) vom Reflektor (7, 24) durch die Öffnungen (8, 9) in Richtung des Displays (4, 21) leitbar ist.

2. Anzeigeeinrichtung nach Anspruch 1, **dadurch gekennzeichnet, dass** die Facettenelemente (10) in Abhängigkeit der Lage des Displays (4, 21) ausgerichtet sind, so dass das Licht im Wesentlichen parallel auf das Display (4, 21) leitbar ist.

3. Anzeigeeinrichtung nach einem der Ansprüche 1 oder 2, **dadurch gekennzeichnet, dass** die Leiterplatte (5, 22), der Reflektor (7, 24) und das Display (4, 21) parallel zur Anzeige (3, 25) in der Anzeigeeinrichtung befestigt sind.

4. Anzeigeeinrichtung nach einem der Ansprüche 1 bis 3 **dadurch gekennzeichnet, dass** das Leuchtmittel (6, 23) mittig zum Reflektor (7, 24) in der Anzeigeeinrichtung (1, 20) befestigt ist.

5. Anzeigeeinrichtung nach einem der Ansprüche 1 bis 4, **dadurch gekennzeichnet, dass** die Facettenelemente (10) in Abhängigkeit des Leuchtmittels (6, 23) derart ausgerichtet sind, dass das Display (4, 21) vollflächig ausleuchtbar ist, wobei das Licht (L) hinter dem Bereich der Leiterplatte (5, 22) leitbar ist, der das Leuchtmittel (6, 23) aufnimmt.

6. Anzeigeeinrichtung nach einem der Ansprüche 1 bis 5, **dadurch gekennzeichnet, dass** mindestens ein weiteres Leuchtmittel (6, 23) auf der dem Display (4, 21) entgegengesetzten Seiten der Leiterplatte (5, 22) angeordnet ist.

7. Anzeigeeinrichtung nach Anspruch 6, **dadurch gekennzeichnet, dass** das weitere Leuchtmittel (6, 23) ein gleiches oder unterschiedliches Emissionsspektrum aufweist.

8. Anzeigeeinrichtung nach einem der Ansprüche 1 bis 7, **dadurch gekennzeichnet, dass** mindestens eine Streufolie (11, 26) zwischen der Anzeige (3, 25) und dem Display (4, 21) auf der Anzeige (3, 25) und/oder dem Display (4, 21) aufgebracht ist.

9. Anzeigeelnrichtung nach einem der Ansprüche 1 bis 7, **dadurch gekennzeichnet, dass** mindestens eine Streufolie (26) auf dem Display (21) und auf der der Anzeige (25) entgegengesetzten Seite aufgebracht ist.

10. Anzeigeeinrichtung nach einem der Ansprüche 1 bis 9, **dadurch gekennzeichnet, dass** die Anzeige (3, 25) einem Bedienelement, insbesondere einem Dreh- oder Drehdrücksteller, zugeordnet ist, so dass mittels des Bedlenalementes die Anzeige (3, 25) steuerbar ist.

## Claims

1. Display device in a motor vehicle, consisting of a display (3, 25), a transilluminatable screen (4, 21) disposed behind the display (3, 25), a lighting means (6, 23) and a reflector (7, 24), wherein the lighting means (6, 23) is attached in the display device (1, 20) between the screen (4, 21) and the reflector (7, 24) and the light (L) of the lighting means (6, 23) can be parallelised and directed towards and through the screen (4, 21) onto the display (3, 25) by means of the reflector (7, 24), so that symbols that can be changed by means of the screen (4, 21) can be shown on the display (3, 24), wherein the display device (1, 20) is a part of a control element, in particular of a push button and **characterised in that** the reflector (7, 24) is a facetted reflector (7, 24), and that a circuit board (5, 22) is attached in the display device (1, 20) between the screen (4, 21) and the reflector (7, 24), and that the lighting means (6, 23) is attached on the side of the circuit board (5, 22) disposed facing away from the screen (4, 21) and that the circuit board (5, 22) comprises openings (8, 9), so that the light (L) of the lighting means (6, 23) can be directed by the reflector (7, 24) through the openings (8, 9) towards the screen (4, 21).

2. Display device according to claim 1, **characterised in that** the facet members (10) are oriented depending on the position of the screen (4, 21), so that the light can be directed onto the screen (4, 21) in a substantially parallel manner.

3. Display device according to any one of the claims 1 or 2, **characterised in that** the circuit board (5, 22), the reflector (7, 24), and the screen (4, 21) are attached parallel to the display (3, 25) in the display device.

4. Display device according to any one of the claims 1 to 3, **characterised in that** the lighting means (6, 23) is attached centrally relative to the reflector (7, 24) in the display device (1, 20).

5. Display device according to any one of the claims 1 to 4, **characterised in that** the facet members (10), depending on the lighting means (6, 23), are oriented such that the screen (4, 21) can be illuminated over its entire surface, wherein the light (L) can be directed behind the area of the circuit board (5, 22) accommodating the lighting means (6, 23).

6. Display device according to any one of the claims 1 to 5, **characterised in that** at least one further lighting means (6, 23) is disposed on the sides of the circuit board (5, 22) facing away from the screen (4, 21).

7. Display device according to claim 6, **characterised in that** the further lighting means (6, 23) has the same or a different emission spectrum.

8. Display device according to any one of the claims 1 to 7, **characterised in that** at least one diffusion sheet (11, 26) is applied on the display (3, 25) and/or the screen (4, 21) between the display (3, 25) and the screen (4, 21).

9. Display device according to any one of the claims 1 to 7, **characterised in that** at least one diffusion sheet (26) is applied on the screen (21) and on the side facing away from the display (25).

10. Display device according to any one of the claims 1 to 9, **characterised in that** the display (3, 25) is associated with a control element, in particular with a rotary or a rotary/push actuator, so that the display (3, 25) can be controlled by means of the control element.

## Revendications

1. Dispositif d'affichage pour un véhicule automobile, se composant d'un afficheur (3, 25), d'un écran de visualisation (4, 21) disposé derrière ledit afficheur (3, 25) et apte à être transilluminé, d'un moyen lumineux (6, 23) et d'un réflecteur (7, 24), ledit moyen lumineux (6, 23) étant fixé entre ledit écran de visualisation (4, 21) et ledit réflecteur (7, 24) dans le dispositif d'affichage (1, 20) et la lumière (L) dudit moyen lumineux (6, 23) pouvant être parallélisée par le biais du réflecteur (7, 24) et être dirigée en direction à travers ledit écran de visualisation (4, 21) sur ledit afficheur (3, 25) de sorte qu'une symbolique modifiable au moyen de l'écran de visualisation (4, 21) puisse être représentée sur ledit afficheur (3, 25), ledit dispositif d'affichage (1, 20) constituant une partie d'un élément de commande, en particulier d'un bouton-poussoir, et **caractérisé par le fait que** ledit réflecteur (7, 24) est un réflecteur à facettes (7, 24) et qu'une carte de circuits imprimés (5, 22) est fixée entre ledit écran de visualisation (4, 21) et le réflecteur (7, 24) dans ledit dispositif d'affichage (1, 20) et que ledit moyen lumineux (6, 23) est fixé sur la face de la carte de circuits imprimés (5, 22) qui est opposée à l'écran de visualisation (4, 21) et que ladite carte de circuits imprimés (5, 22) présente des ouvertures (8, 9) de sorte que la lumière (L) du moyen lumineux (6, 23) peut être dirigée depuis ledit réflecteur (7, 24) à travers les ouvertures (8, 9) en direction de l'écran de visualisation (4, 21).

2. Dispositif d'affichage selon la revendication 1, **caractérisé par le fait que** les éléments-facettes (10) sont orientés en fonction de la position de l'écran de visualisation (4, 21) de sorte que la lumière peut être dirigée pour l'essentiel parallèlement sur ledit écran de visualisation (4, 21).

3. Dispositif d'affichage selon l'une quelconque des revendications 1 ou 2, **caractérisé par le fait que** ladite carte de circuits imprimés (5, 22), ledit réflecteur (7, 24) et ledit écran de visualisation (4, 21) sont fixés parallèlement à l'afficheur (3, 25) dans ledit dispositif d'affichage.

4. Dispositif d'affichage selon l'une quelconque des revendications 1 à 3, **caractérisé par le fait que** ledit moyen lumineux (6, 23) est fixé dans le dispositif d'affichage (1, 20) de manière centrale par rapport au réflecteur (7, 24).

5. Dispositif d'affichage selon l'une quelconque des revendications 1 à 4, **caractérisé par le fait que** les éléments-facettes (10) sont orientés en fonction du moyen lumineux (6, 23) de telle sorte que ledit écran de visualisation (4, 21) peut être illuminé sur toute la surface, la lumière (L) pouvant être dirigée derrière la zone de la carte de circuits imprimés (5, 22), qui reçoit le moyen lumineux (6, 23).

6. Dispositif d'affichage selon l'une quelconque des revendications 1 à 5, **caractérisé par le fait qu'**au moins un autre moyen lumineux (6, 23) est disposé sur la face de la carte de circuits imprimés (5, 22) qui est opposée à l'écran de visualisation (4, 21).

7. Dispositif d'affichage selon la revendication 6, **caractérisé par le fait que** ledit autre moyen lumineux (6, 23) présente un spectre d'émission identique ou différent.

8. Dispositif d'affichage selon l'une quelconque des revendications 1 à 7, **caractérisé par le fait qu'**au moins une feuille de diffusion (11, 26) est appliquée entre l'afficheur (3, 25) et l'écran de visualisation (4, 21) sur ledit afficheur (3, 25) et/ou ledit écran de visualisation (4, 21).

9. Dispositif d'affichage selon l'une quelconque des revendications 1 à 7, **caractérisé par le fait qu'**au moins une feuille de diffusion (26) est appliquée sur ledit écran de visualisation (21) et sur la face opposée à l'afficheur (25).

10. Dispositif d'affichage selon l'une quelconque des revendications 1 à 9, **caractérisé par le fait que** ledit afficheur (3, 25) est associé à un élément de commande, en particulier à un actionneur rotatif ou actionneur rotatif de pression de sorte que ledit afficheur (3, 25) peut être commandé au moyen de l'élément de commande.
